# EUROPEAN PATENT APPLICATION

(11) **EP 4 621 897 A1**
(43) Date of publication of application: **24.09.2025**
(21) Application number: 24886188.2
(22) Date of filing: 29.10.2024
(51) Int. Cl.: H01M 10/04, H01M 50/167

(54) **BATTERY CELL BEADING DEVICE**

(30) Priority: 31.10.2023 KR 20230147911
(71) Applicant: LG Energy Solution, Ltd., Seoul 07335 (KR)
(72) Inventor: KIM, Dae Cheon, Daejeon 34122 (KR); PARK, Dae Hyun, Daejeon 34122 (KR); KIM, Jong Seong, Daejeon 34122 (KR)
(74) Representative: Goddar, Heinz J.
(86) International application number: PCT/KR2024/016600
(87) International publication number: WO 2025/095514

(57) **Abstract**

A battery cell beading device according to one example of the present invention comprises a cell rotation part capable of seating a cell case, in which an electrode assembly is accommodated, and provided to rotate the cell case, a bead forming part including a forming member provided to pressurize the cell case upon rotation of the cell case, to form a bead portion along the circumferential direction of the cell case, and a backup roller part including a roller member being in contact with the cell case when the forming member pressurizes the cell case and provided to be rotatable, and provided to be position-adjustable in a direction closer to or farther from the rotational center axis of the cell case.

## Description

### Technical Field

The present invention relates to a battery cell beading device, and particularly, relates to a cylindrical battery cell beading device, and specifically, relates to a cylindrical battery cell beading device for forming a bead portion on an upper end of a cylindrical battery cell during a beading process during an assembly process of a cylindrical battery cell.

This application claims the benefit of priority based on Korean Patent Application No. 10-2023-0147911 dated October 31, 2023, the disclosure of which is incorporated herein by reference in its entirety.

### Background Art

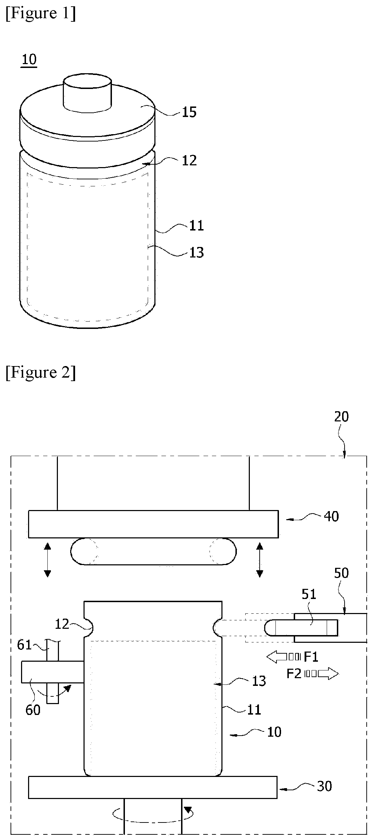

Figure 1 is a perspective diagram of a cylindrical battery cell.

As shown in Figure 1, the cylindrical battery cell (10) comprises a cell case (11), an electrode assembly (13), and a cap assembly (15).

The cell case (11) is provided in a cylindrical shape with an opening at the top.

The electrode assembly (13) is one obtained by winding a negative electrode, a separator, a positive electrode, and a separator in the form of a roll in a state where they are sequentially laminated. The electrode assembly (13) is provided to be insertable into the internal space of the cell case (11). The cap assembly (15) is provided to seal the opening. The cap assembly (15) may comprise a positive terminal.

The cylindrical battery cell (10) is provided with a bead portion (12) on the outer periphery of the cell case (11) for fixing the electrode assembly (13) to the internal space of the cell case (11). The bead portion (12) is provided at the upper end of the cell case (11).

A beading step is a step in which the electrode assembly (13) is inserted into the internal space of the cell case (11) and the bead portion (12) is formed at the upper end of the cell case (11).

Figure 2 is a configuration diagram of a conventional beading device.

As shown in Figure 2, the conventional beading device (20) comprises a cell rotation part (30), a cell holder part (40), a bead forming part (50), and a backup roller (60).

The cell case (11) can be seated on the cell rotation part (30). The cell rotation part (30) is for rotating the cell case (11).

The cell holder part (40) is disposed on the upper portion of the cell rotation part (30). The cell holder part (40) is provided to be insertable into the upper end of the cell case (11) and rotatably supports the cell case (11). The cell holder part (40) can be provided to be movable downward toward the cell case (11) seated on the cell rotation part (30).

The bead forming part (50) comprises a forming member (51) for forming the bead portion (12) on the outer surface of the cell case (11). The forming member (51) is provided to be movable in a first direction (F 1) closer to the outer surface of the cell case (11) or in a second direction (F2) farther from the outer surface of the cell case (11).

The backup roller (60) is spaced apart from the forming member (51) and is disposed to be capable of contacting the outer surface of the cell case (11). The backup roller (60) is for preventing the outer diameter of the relevant peripheral region of the cell case (11) from increasing due to the force that the forming member (51) pressurizes the outer surface of the cell case (11) in the first direction (F1).

In the beading step, the cell case (11) in which the electrode assembly (13) is embedded is seated on the cell rotation part (30). When the cell case (11) is rotated in the rotational direction of the cell rotation part (30), the forming member (51) pressurizes the outer surface of the rotating cell case (11) in the first direction (F1).

In this instance, the backup roller (60) supports the cell case (11) while idling along the outer surface of the rotating cell case (11) at a fixed position.

Through such a process, the bead portion (12) is provided on the outer surface of the cell case (11) along the circumferential direction of the cell case (11). The bead portion (12) is a recessed groove on the outer surface of the cell case (11).

However, in the process of forming the bead portion (12) on the outer surface of the cell case (11), when the force that the forming member (51) pressurizes the cell case (11) in the first direction (F1) becomes greater than the force that the backup roller (60) laterally supports the cell case (11), the backup roller (60) scratches the outer surface of the cell case (11). The roller fixing shaft (61) of the conventional backup roller (60) is disposed at a fixed position. The roller fixing shaft (61) is provided so as not to move during the operation of the bead forming part (50).

In the case of the conventional beading device (20), there is a problem that in the process of forming the bead portion (12), crumbs are generated while the outer surface of the cell case (11) is scratched, and the generated crumbs act as a factor shortening the lifespan of the beading device (20), thereby causing inconvenience in maintenance.

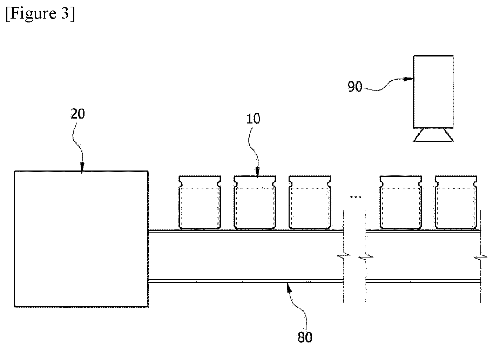

Figure 3 is a diagram for explaining a process of externally inspecting cylindrical battery cells in a vision inspection device after an assembly process.

The cylindrical battery cell (10) is moved from the beading device (20) to the vision inspection device (90) by a transfer part (80). The vision inspection device (90) is for externally inspecting the cylindrical battery cell (10). According to the external inspection result, the battery cell (10) with scratches should be discarded as a defective product.

Upon the external inspection, if scratches are found in the battery cell (10), the operation of the transfer part (80) transferring the battery cells (10) from the beading device (20) to the vision inspection device (90) is stopped. Conventionally, when any scratch occurred on the outer surface of the cylindrical battery cell (10), it was determined as operation defects of the beading device (20), whereby multiple battery cells (10) located between the beading device (20) and the vision inspection device (90) had to be discarded. Disposal of cylindrical battery cells (10) due to poor beading causes economic loss.

### Disclosure

### Technical Problem

The present invention is intended to provide a cylindrical battery cell beading device capable of preventing scratches from occurring on a cell case by adjusting a position of a roller member laterally supporting the outer surface of the cell case while idling when a forming member of a bead forming part pressurizes the cell case above an operating load value in a beading process.

### Technical Solution

In order to solve the above-described problem, a cylindrical battery cell beading device related to one example of the present invention comprises a cell rotation part capable of seating a cell case, in which an electrode assembly is accommodated, and provided to rotate the cell case, a bead forming part including a forming member provided to pressurize the cell case upon rotation of the cell case, to form a bead portion along the circumferential direction of the cell case, and a backup roller part including a roller member being in contact with the cell case when the forming member pressurizes the cell case and provided to be rotatable, and provided to be position-adjustable in a direction closer to or farther from the rotational center axis of the cell case.

Also, a cylindrical battery cell beading device according to one example of the present invention may comprise a cell rotation part capable of seating a cell case, in which an electrode assembly is accommodated, and provided to rotate the cell case, a bead forming part including a forming member provided to pressurize the outer surface of the cell case, to form a bead portion along the circumferential direction of the cell case upon rotation of the cell case, and a backup roller part including a roller member being in contact with the outer surface of the cell case and provided to be capable of idling along the outer surface of the cell case, and provided to be position-adjustable in a direction closer to or farther from the rotational center axis of the cell case when the forming member pressurizes the cell case.

In addition, the backup roller part may be provided such that a position of the roller member is adjusted based on the magnitude of the force that the forming member pressurizes the cell case.

Furthermore, the backup roller part may comprise a roller center axis on which the roller member is rotatably mounted, and a roller position adjustment part connected to the roller center axis, and provided so that the roller center axis moves in a direction farther from the rotational center axis of the cell case when the force transmitted from the cell case to the roller member by the forming member is above an operating load value.

Also, the roller position adjustment part may have a reference length, and may be provided to be length-adjustable in a direction perpendicular to the roller center axis. As one example, the roller position adjustment part may be provided to be contractible by the force applied to the roller center axis, where the reference length may be shortened.

In addition, the roller position adjustment part may be provided so that when the force applied to the roller center axis is a normal load value below the operating load value, the reference length is maintained.

Furthermore, the roller position adjustment part may be provided so that when the force applied to the roller center axis is an abnormal load value above the operating load value, it moves in a direction farther from the rotational center axis of the cell case while it is contracted at the reference length. At this time, the roller member may maintain a state in contact with the outer surface of the cell case, and may be idled.

Also, the roller position adjustment part may comprise a gas spring.

In addition, the backup roller member may further comprise a backup body on which the roller position adjustment part and the roller center axis are mounted. Furthermore, the roller position adjustment part may comprise a first adjustment member connecting one end of the roller center axis adjacent to the roller member and the backup body, and a second adjustment member disposed parallel to the first adjustment member and connecting the other end of the roller center axis and the backup body.

Also, the cylindrical battery cell beading device may comprise a cell holder part disposed on the upper portion of the cell rotation part, and provided so that the upper end of the cell case is insertable and provided to rotatably support the cell case, a jig part rotatably supporting the cell rotation part, and a jig elevation part mounted on the jig part and provided to move the jig part in a direction closer to or farther from the cell holder part.

In addition, the cell holder part may comprise a holder body surrounding the outer surface of the cell case and provided so that a region where the bead portion is to be formed is exposed to the outside, and a pusher member mounted on the holder body so as to be spaced apart from the inner surface of the holder body, and being insertable into the cell case and provided to pressurize the electrode assembly within the cell case.

Furthermore, the cylindrical battery cell beading device may comprise a guide part including a guide roll mounted on the jig part to be capable of contacting the outer surface of the cell case seated on the cell rotation part and provided to be capable of idling along the outer surface of the cell case upon rotation of the cell case, and provided to support the cell case.

Also, the cylindrical battery cell beading device may comprise a jig moving part mounted on the jig part and provided to move the jig part in a direction closer to or farther from the backup roller part, and a holder moving part mounted on the cell holder part and provided to move the cell holder part in a direction closer to or farther from the backup roller part.

In addition, the jig moving part and the holder moving part may allow the outer surface of the cell case to be in contact with the roller member of the backup roller part by moving the jig part and the cell holder part together in a direction closer to the backup roller part before operation of the cell rotation part, and may allow the outer surface of the cell case to be separated from the roller member by moving the jig part and the cell holder part together in a direction farther from the backup roller part when formation of the bead portion is completed.

Furthermore, the cylindrical battery cell beading device may comprise a formation moving part mounted on the bead forming part and provided to move the bead forming part in a direction closer to or farther from the backup roller part.

Also, the formation moving part may be provided so that the forming member of the bead forming part is in contact with the outer surface of the cell case by moving the bead forming part in a direction closer to the backup roller part before forming the bead portion on the outer surface of the cell case.

In addition, the cell rotation part may comprise a seating plate on which the cell case is seated, a first rotation axis mounted on the seating plate and positioned coaxially with the rotational center axis of the cell case, and a first rotation drive part providing the first rotation axis with rotational force.

Furthermore, the bead forming part may comprise a second rotation axis on which the forming member is rotatably mounted, and a second rotation drive part providing the second rotation axis with rotational force, and may be provided to pressurize the outer surface of the cell case while the forming member rotates upon formation of the bead portion.

Also, the forming member may be provided with a forming protrusion along the circumferential direction of the forming member.

In addition, the cylindrical battery cell beading device may comprise an alarm part providing a warning alarm when the roller member moves in a direction farther from the rotational center axis of the cell case.

### Advantageous Effects

As discussed above, the cylindrical battery cell beading device related to one example of the present invention has the following effects.

When the forming member of the bead forming part pressurizes the cell case above the operating load value, the backup roller part adjusts the position of the roller member supporting the outer surface of the cell case in the opposite direction to the pressurization direction of the forming member, whereby it is possible to prevent damage to the cell case due to the roller member.

### Description of Drawings

Figure 1 is a perspective diagram of a cylindrical battery cell.
Figure 2 is a configuration diagram of a conventional cell beading device.
Figure 3 is a diagram for explaining a process of externally inspecting cylindrical battery cells in a vision inspection device after an assembly process.
Figure 4 is a configuration diagram of a cylindrical battery cell beading device according to one example of the present invention.
Figure 5 is an arrangement state diagram of a bead forming part, a cell holder part, and a backup roller part in one example of the present invention.
Figure 6 schematically illustrates a cross-sectional diagram of a backup roller part according to one example of the present invention.
Figure 7 is a state diagram, in which a cell case is inserted into a cell holder part and is in contact with a roller member of a backup roller part, in one example of the present invention.
Figure 8 is an operation state diagram of a cylindrical battery cell beading device performing a beading process according to one example of the present invention.
Figure 9 is an operation state diagram of a roller position adjustment part when a forming member pressurizes a cell case above an operating load value in one example of the present invention.

### Mode for Invention

Hereinafter, a cylindrical battery cell beading device according to one example of the present invention will be described with reference to the attached drawings.

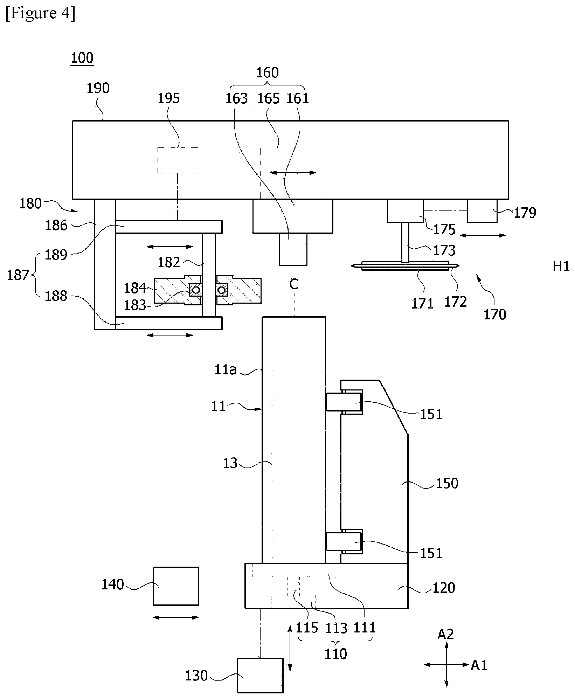

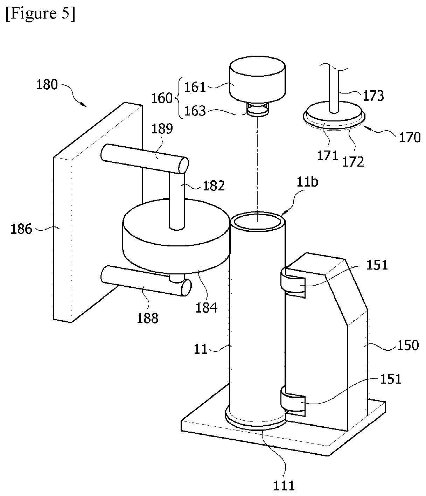

Figure 4 is a configuration diagram of a cylindrical battery cell beading device according to one example of the present invention, and Figure 5 is an arrangement state diagram of a bead forming part, a cell holder part, and a backup roller part in one example of the present invention.

The cylindrical battery cell beading device (100) related to one example of the present invention may comprise a cell rotation part (110) capable of seating a cell case (11), in which an electrode assembly (13) is accommodated, and provided to rotate the cell case (11).

Also, the cylindrical battery cell beading device (100) may comprise a bead forming part (170) including a forming member (171) provided to pressurize the cell case (11) upon rotation of the cell case (11), to form a bead portion (12) along the circumferential direction of the cell case (11).

In addition, the bead forming part (170) is for forming a bead portion (12) along the circumferential direction of the cell case (11) upon rotation of the cell case (11), wherein the forming member (171) may be provided to pressurize the outer surface (11a) of the cell case (11).

Furthermore, the cylindrical battery cell beading device (100) may comprise a backup roller part (180) provided to be position-adjustable in a direction closer to or farther from the rotational center axis (C) of the cell case (11). In addition, the backup roller part (180) comprises a roller member (184) being in contact with the cell case (11) when the forming member (171) pressurizes the cell case (11) and provided to be rotatable. That is, the backup roller part (180) is provided to be capable of adjusting the position of the roller member (184) in a direction closer to or farther from the rotational center axis (C) of the cell case (11).

Also, the roller member (184) may be in contact with the outer surface (11a) of the cell case (11), and may be provided to be capable of idling along the outer surface (11a) of the cell case (11) upon rotation of the cell case (11). In addition, the backup roller part (180) may be provided to be position-adjustable in a direction closer to or farther from the rotational center axis (C) of the cell case (11) when the forming member (171) pressurizes the cell case (11).

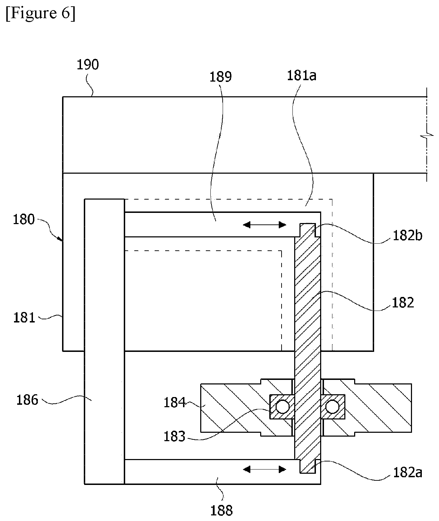

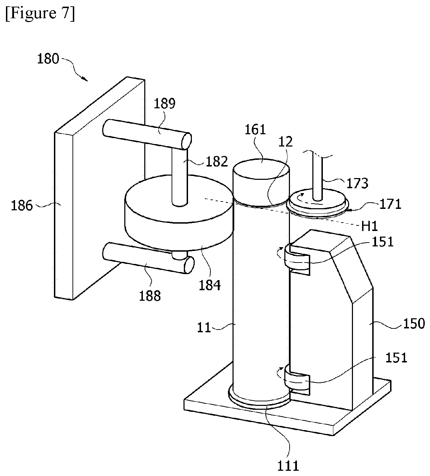

Figure 6 schematically illustrates a cross-sectional diagram of a backup roller part according to one example of the present invention, and Figure 7 is a state diagram, in which a cell case is inserted into a cell holder part and is in contact with a roller member of a backup roller part, in one example of the present invention.

The backup roller part (180) is for laterally supporting the cell case (11) when the forming member (171) pressurizes the cell case (11).

The backup roller part (180) may comprise a roller member (184) being in contact with the outer surface (11a) of the cell case (11) and provided to be capable of idling along the outer surface (11a) of the cell case (11), and a roller center axis (182) on which the roller member (184) is rotatably mounted.

The backup roller part (180) may comprise a roller position adjustment part (187) connected to the roller center axis (182). In addition, the backup roller part (180) may comprise a backup body (181) on which the roller position adjustment part (187) and the roller center axis (182) are mounted.

The backup body (181) may be mounted on an upper body part (190). The upper body part (180) may be installed in a space where the beading device (100) is installed. The backup body (181) may be fixed to the upper body part (190). The roller position adjustment part (187) and the roller center axis (182) may be movably mounted on the backup body (181).

A bearing member (183) may be mounted on the roller center axis (182). The roller member (184) may be mounted on the bearing member (183) to be capable of idling.

The roller member (184) may be mounted to be exposed to the outside of the backup body (181). In addition, the roller member (184) may be disposed to face the forming member (171) of the bead forming part (170). The roller member (184) may be disposed below a forming position (H1) of the forming member (171). The forming position (H1) is a position where the bead portion (12) is formed in the cell case (11).

Referring to Figure 4, the roller member (184) may be in contact with the outer surface (11a) of the cell case (11), and may support the cell case (11) laterally while idling along the outer surface of the cell case (11). The roller member (184) may support the outer surface (11a) of the cell case (11) laterally in a first axial direction (A1).

In the present example, for the convenience of explanation, the direction where the outer surface of the cell case (11) is laterally supported is referred to as the first axial direction (A1). In addition, a direction perpendicular to the first axial direction (A1) and parallel to the rotational center axis (C) of the cell case (11) is referred to as a second axial direction (A2).

The roller position adjustment part (187) may be mounted on the roller center axis (182).

The roller position adjustment part (187) may have a predetermined reference length, and may be provided to be length-adjustable in a direction (A1) perpendicular to the roller center axis (182). The roller position adjustment part (187) may be provided to be contractible by a force applied to the roller center axis (182).

The roller position adjustment part (187) may be provided so that the position of the roller member (184) is adjusted based on the magnitude of the force that the forming member (171) pressurizes the cell case (11).

As one example, the roller position adjustment part (187) may comprise a first adjustment member (188) and a second adjustment member (189).

The first adjustment member (188) may connect one end (182a) of the roller center axis (182) adjacent to the roller member (184) and the backup body (181). The first adjustment member (188) is provided to be contractible at an operating load value or higher.

The second adjustment member (189) may be disposed parallel to the first adjustment member (188). The second adjustment member (189) connects the other end (182b) of the roller center axis (182) and the backup body (181). The second adjustment member (189) is provided to be contractible at an operating load value or higher.

The first and second adjustment members (188, 189) may be disposed parallel in the first axial direction (A1). The first and second adjustment members (188, 189) may operate at the same operating load value. The first and second adjusting members (188, 189) may be gas springs. At this time, if the force transmitted to the roller member (184) through the cell case (11) by the forming member (171) is above the operating load value, each gas spring may be contracted, and accordingly, the first and second adjusting members (188, 189) may have shortened lengths. Accordingly, the roller center axis (182) may be provided to move in a direction farther from the rotational center axis (C) of the cell case (11).

The first and second adjusting members (188, 189) may be provided to move in a direction farther from the rotational center axis (182) of the cell case (11) if the force transmitted from the cell case (11) to the roller member (184) by the forming member (171) is above the operating load value.

Here, the operating load value is an operating reference value of the roller position adjustment part (187). The first and second adjustment members (188, 189) may have variable operating load values depending on the type of gas spring.

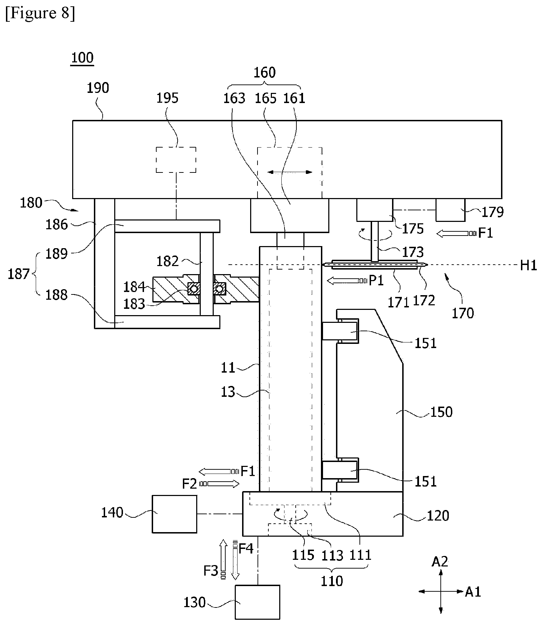

Figure 8 is an operation state diagram of a cylindrical battery cell beading device performing a beading process according to one example of the present invention.

Referring to Figure 8, upon formation of the bead portion (12), if the forming member (171) pressurizes the cell case (11) with a normal load value (P1), the first and second adjustment members (188, 189) maintain the reference length.

The first and second adjustment members (188, 189) do not operate when a force below the operating load value is applied. The first and second adjustment members (188, 189) may maintain the reference length if the force applied to the roller center axis (182) is a normal load value (P1) below the operating load value.

Here, the normal load value (P1) is the preset pressurization strength of the forming member (171), to form the bead portion (12) on the outer surface of the cell case (11).

At the position where the first and second adjustment members (188, 189) have the reference length with respect to the backup body (181), the roller member (184) may support the cell case (11) laterally while idling along the outer surface of the cell case (11).

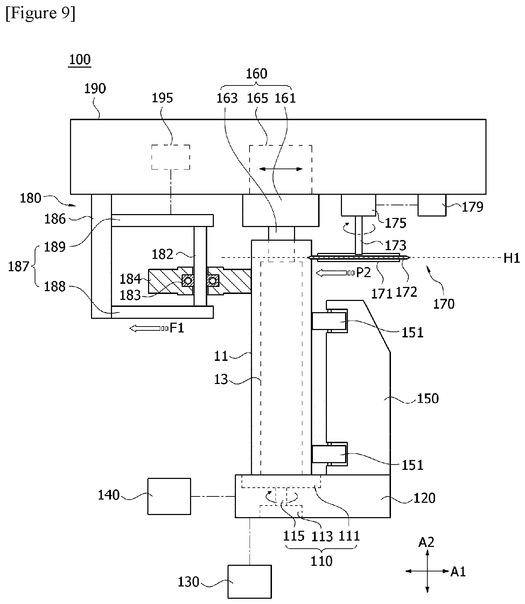

Figure 9 is an operation state diagram of a roller position adjustment part when a forming member pressurizes a cell case above an operating load value in one example of the present invention.

Referring to Figure 9, when the force applied to the roller center axis (182) is an abnormal load value (P2) above the operating load value, the roller member (184) may be in contact with the outer surface of the cell case (11) while the first and second adjustment members (188, 189) is contracted at the reference length, and may be moved in a direction farther from the rotational center axis of the cell case (11) while idling.

The contracted length of the first and second adjustment members (188, 189) may vary depending on the degree that the force transmitted to the roller member (184) through the cell case (11) pushes the roller center axis (182).

As shown in Figure 9, when the forming member (171) pressurizes the cell case (11) with an abnormal load value (P2) upon formation of the bead portion (12), the first and second adjusting members (188, 189) are shortened by the force transmitted to the roller center axis (182) through the roller member (184) while contracting.

The roller center axis (182) moves by the force transmitted to the roller member (184) through the cell case (11) in a state where the roller member (184) is in contact with the outer surface of the cell case (11). The roller center axis (182) moves in a direction farther from the rotational center axis of the cell case (11) by the first and second adjusting members (188, 189).

When the forming member (171) pressurizes the cell case (11) with the abnormal load value (P2, see Figure 9), the position of the roller member (184) is adjusted in a state where the roller member (184) is in contact with the outer surface of the cell case (11) by the first and second adjusting members (188, 189), whereby the backup roller part (180) related to the present example can prevent scratches of the cell case (11) due to the roller member (184) upon the beading process.

In addition, the cylindrical battery cell beading device (100) may comprise an alarm part (195) providing a warning alarm when the roller member (184) moves in a direction farther from the rotational center axis of the cell case (11). Through the warning alarm, a worker can recognize that the forming member (171) of the bead forming part (170) pressurizes the cell case (11) above the normal load value (P1) upon the beading process.

Hereinafter, the constitutions of the cell rotation part (110) will be described.

The cell rotation part (110) may comprise a seating plate (111), a first rotation axis (115), and a first rotation drive part (113).

The cell case (11) is mounted on the seating plate (111). The seating plate (111) may be rotatably mounted on a jig part (120). The first rotation axis (115) is mounted on the seating plate (111). The seating plate (111) rotates in the rotational direction of the first rotation axis (115).

The first rotation axis (115) is positioned coaxially with the rotational center axis of the cell case (11). The first rotation drive part (113) is mounted on the first rotation axis (115).

The first rotation drive part (113) is for providing the first rotation axis (115) with rotational force. The first rotation drive part (113) may be a motor.

Upon operation of the first rotation drive part (113), the cell case (11) may be rotated in the rotational direction of the first rotation axis (115) together with the seating plate (111), and may be beaded by the forming member (171).

In addition, the cylindrical battery cell beading device (100) may comprise a jig part (120) rotatably supporting the cell rotation part (110). The cell rotation part (110), a guide part (150), a jig elevation part (130), and a jig moving part (140) may be mounted on the jig part (120).

The guide part (150) may be mounted on the jig part (120) to be capable of contacting the outer surface of the cell case (11) seated on the cell rotation part (110). The guide part (150) comprises a guide roll (151) provided to be capable of idling along the outer surface of the cell case (11) upon rotation of the cell case (11).

The guide part (150) may be provided to support the cell case (11) on the opposite side of the backup roller part (180). The guide part (150) is disposed on the lower portion of the bead forming part (170).

Referring to Figure 8, the jig elevation part (130) may be mounted on the jig part (120), and may be provided to move the jig part (120) in a direction (F3) closer to or a direction (F4) farther from the cell holder part (160). The jig moving part (140) may move the jig part (120) in the same direction as the holder moving part (165).

The jig moving part (140) may be mounted on the jig part (120), and may be provided to move the jig part (120) in a direction closer to or farther from the backup roller part (180).

The jig moving part (140) may allow the outer surface of the cell case (11) to be in contact with the roller member (184) of the backup roller part (180) by moving the jig part (120) in a direction (F1) closer to the backup roller part (180) before operation of the cell rotation part (110).

When the forming of the bead portion (12) is completed, the jig moving part (140) may allow the outer surface of the cell case (11) to be separated from the roller member (184) by moving the jig part (120) in a direction (F2) farther from the backup roller part (180).

Referring to Figures 5 and 7, the cylindrical battery cell beading device (100) may comprise a cell holder part (160) disposed on the upper portion of the cell rotation part (110) and provided so that the upper end (11b) of the cell case (11) is insertable, and provided to support the cell case (11) rotatably.

The cell holder part (160) may comprise a holder body (161), a pusher member (163), and a holder moving part (165).

The holder body (161) may be provided to surround the opening (upper end) of the cell case (11), and as one example, may be provided to surround a partial region of the outer surface of the upper end (11b) of the cell case (11), and so that a region where the bead portion (12) is to be formed is exposed to the outside. As one example, the holder body (161) may have a diameter larger than the outer diameter of the cell case (11).

The pusher member (163) is mounted on the holder body (161). The pusher member (163) has a diameter smaller than the inner diameter of the cell case (11). The pusher member (163) may be provided to extend to the lower portion of the holder body (161) along the second axial direction (A2).

The pusher member (163) may be provided to pressurize the electrode assembly (13) within the cell case (11) upon insertion into the cell case (11).

The holder moving part (165) may be mounted on the upper body part (190). The holder moving part (165) may be provided to move the cell holder part (160) in a direction closer to or farther from the backup roller part (180).

The holder moving part (165) may allow the outer surface of the cell case (11) to be in contact with the roller member (184) of the backup roller part (180) by moving the cell holder part (160) in a direction (F1) closer to the backup roller part (180) before operation of the cell rotation part (110).

When formation of the bead portion (12) is completed, the holder moving part (165) may allow the outer surface of the cell case (11) to be separated from the roller member (184) by moving the cell holder part (160) in a direction (F2) farther from the backup roller part (180).

Hereinafter, the bead forming part (170) will be described.

The bead forming part (170) is for forming a bead portion (12) along the circumferential direction of the cell case (11) upon rotation of the cell case (11). The bead portion (12) may be a recessed groove in the outer surface of the cell case (11).

The bead forming part (170) may comprise the forming member (171), a second rotation axis (173), a second rotation drive part (175), and a formation moving part (179).

The forming member (171) may be disposed to be capable of contacting the outer surface (11a) of the cell case (11) at a forming position (H1) of the cell case (11). Here, the forming position (H1) is a position where the bead portion (12) is formed at the upper end (l lb) of the cell case (11).

The forming member (171) may be provided to pressurize the outer surface of the cell case (11). The forming member (171) is rotatably mounted on the second rotation axis (173). The forming member (171) may be a circular rotating body.

The forming member (171) may be provided with a forming protrusion (172). The forming protrusion (172) may be provided to protrude outwardly along the circumferential direction of the forming member (171).

While the forming member (171) rotates in the rotational direction of the second rotation axis (173) upon formation of the bead portion (12), it may be provided so that the forming protrusion (172) pressurizes the outer surface of the cell case (11).

The second rotation drive part (175) is mounted on the second rotation axis (173). The second rotation axis (173) may be disposed parallel to the rotational center axis of the cell case (11). The second rotation drive part (175) may be a motor.

The formation moving part (179) may be mounted on the upper body part (190). The formation moving part (179) is provided to move the bead forming part (170) in a direction closer to or farther from the backup roller part (180).

The formation moving part (179) may be provided so that the forming member (171) of the bead forming part (170) is in contact with the outer surface of the cell case (11) by moving the bead forming part (170) in a direction (F1) closer to the backup roller part (180) before forming the bead portion (12) on the outer surface of the cell case (11).

Hereinafter, with reference to Figures 8 and 9, a process in which the cylindrical battery cell beading device (100) forms the bead portion (12) on the upper end of the cylindrical battery cell (10) will be described.

Referring to Figure 8, the cell case (11), in which the electrode assembly (13) is accommodated, is seated on the cell rotation part (110). The cell rotation part (110) is moved up and down toward the cell holder part (160) by the jig elevation part (130).

The jig elevation part (130) moves the jig part (120), on which the cell rotation part (110) is mounted, up and down in the second axial direction (A2). Accordingly, the upper end of the cell case (11) is inserted into the holder body (161) of the cell holder part (160).

Next, the jig moving part (140) and the holder moving part (165) move the jig part (120) and the cell holder part (160) in the first axial direction (A1) in the direction (F1) closer to the roller member (184). The jig moving part (140) and the holder moving part (165) move the jig part (120) and the cell holder part (160) so that the outer surface of the cell case (11) is in contact with the roller member (184) of the backup roller part (180).

Next, the forming member (171) is moved in the first axial direction (A1) so that the forming member (171) is in contact with the outer surface of the cell case (11). The forming member (171) is in contact with the outer surface of the cell case (11) at the forming position (H1).

The forming member (171) pressurizes the outer surface of the cell case (11) with a normal load value (P1) which is a strength to the extent capable of depressing the outer surface of the cell case (11).

The forming member (171) may contact the outer surface of the rotating cell case (11) during rotation, and may form the bead portion (12) on the outer surface of the cell case (11) by pressurizing the outer surface of the cell case (11) in the first axial direction (A1) while rotating together with the second rotation axis (173).

The bead portion (12) is a recessed groove in the outer surface of the cell case (11), which is provided along the circumferential direction of the cell case (11). The bead portion (12) may correspond to a locking projection for fixing the electrode assembly (13) to the inside of the cell case (11).

Referring to Figure 8, when the forming member (171) pressurizes the cell case (11) with the normal load value (P1) upon formation of the bead portion (12), the roller member (184) supports the cell case (11) in the first axial direction (A1) while idling along the outer surface of the cell case (11), whereby it is possible to prevent the outer diameter of the relevant peripheral region of the cell case (11) from increasing.

Referring to Figure 9, when the forming member (171) pressurizes the cell case (11) with an abnormal load value (P2, refer to Figure 9) upon formation of the bead portion (12), the roller member (184) may be position-adjusted in a direction farther from the rotational center axis of the cell case (11) while idling along the outer surface of the cell case (11). Therefore, upon formation of the bead portion (12) in the cell case (11), it is possible to prevent scratches from occurring on the outer surface of the cell case (11) due to the roller member (184).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the cylindrical battery cell beading device related to one example of the present invention, it is possible to prevent scratches from occurring on the cell case upon bead formation.

## Claims

1. A battery cell beading device comprising:
a cell rotation part capable of seating a cell case, in which an electrode assembly is accommodated, and provided to rotate the cell case;
a bead forming part including a forming member provided to pressurize the cell case upon rotation of the cell case, to form a bead portion along the circumferential direction of the cell case; and
a backup roller part including a roller member being in contact with the cell case when the forming member pressurizes the cell case and provided to be rotatable, and provided to be position-adjustable in a direction closer to or farther from the rotational center axis of the cell case.

2. The battery cell beading device according to claim 1, wherein
the backup roller part is provided such that a position of the roller member is adjusted based on the magnitude of the force that the forming member pressurizes the cell case.

3. The battery cell beading device according to claim 2, wherein
the backup roller part further comprises a roller center axis on which the roller member is rotatably mounted; and
a roller position adjustment part connected to the roller center axis, and provided so that the roller center axis moves in a direction farther from the rotational center axis of the cell case when the force transmitted from the cell case to the roller member by the forming member is above an operating load value.

4. The battery cell beading device according to claim 3, wherein
the roller position adjustment part has a reference length, and is provided to be length-adjustable in a direction perpendicular to the roller center axis, and
the roller position adjustment part is provided to be contracted at the reference length when the force applied to the roller center axis is an abnormal load value above the operating load value.

5. The battery cell beading device according to claim 4, wherein
the roller position adjustment part is provided so that when the force applied to the roller center axis is a normal load value below the operating load value, the reference length is maintained.

6. The battery cell beading device according to claim 4, wherein
the roller position adjustment part comprises a gas spring.

7. The battery cell beading device according to claim 3, wherein
the backup roller member further comprises a backup body on which the roller position adjustment part and the roller center axis are mounted, and
the roller position adjustment part comprises:
a first adjustment member connecting one end of the roller center axis adjacent to the roller member and the backup body; and
a second adjustment member disposed parallel to the first adjustment member and connecting the other end of the roller center axis and the backup body.

8. The battery cell beading device according to claim 1, comprising:
a cell holder part disposed on the upper portion of the cell rotation part, and provided so that the upper end of the cell case is insertable and provided to rotatably support the cell case;
a jig part rotatably supporting the cell rotation part; and
a jig elevation part mounted on the jig part and provided to move the jig part in a direction closer to or farther from the cell holder part.

9. The battery cell beading device according to claim 8, wherein
the cell holder part comprises a holder body, and a pusher member mounted on the holder body, being insertable into the cell case, and provided to pressurize the electrode assembly within the cell case.

10. The battery cell beading device according to claim 8, further comprising
a guide part including a guide roll mounted on the jig part to be capable of contacting the outer surface of the cell case seated on the cell rotation part and provided to be capable of idling along the outer surface of the cell case upon rotation of the cell case, and provided to support the cell case.

11. The battery cell beading device according to claim 8, further comprising:
a jig moving part mounted on the jig part and provided to move the jig part in a direction closer to or farther from the backup roller part; and
a holder moving part mounted on the cell holder part and provided to move the cell holder part in a direction closer to or farther from the backup roller part.

12. The battery cell beading device according to claim 11, further comprising
a formation moving part mounted on the bead forming part and provided to move the bead forming part in a direction closer to or farther from the backup roller part, wherein
the formation moving part is provided so that the forming member of the bead forming part is in contact with the outer surface of the cell case by moving the bead forming part in a direction closer to the backup roller part before forming the bead portion on the outer surface of the cell case.

13. The battery cell beading device according to claim 1, wherein the cell rotation part comprises: a seating plate on which the cell case is seated;
a first rotation axis mounted on the seating plate and positioned coaxially with the rotational center axis of the cell case; and
a first rotation drive part providing the first rotation axis with rotational force.

14. The battery cell beading device according to claim 1, wherein
the bead forming part comprises a second rotation axis on which the forming member is rotatably mounted, and a second rotation drive part providing the second rotation axis with rotational force, and is provided to pressurize the outer surface of the cell case while the forming member rotates upon formation of the bead portion.

15. The battery cell beading device according to claim 1, further comprising
an alarm part providing a warning alarm when the roller member moves in a direction farther from the rotational center axis of the cell case.
